# EUROPEAN PATENT SPECIFICATION

(11) **EP 2 734 033 B1**
(45) Date of publication and mention of the grant of the patent: **14.09.2016**
(21) Application number: 12740728.6
(22) Date of filing: 19.07.2012
(51) Int. Cl.: A01G 1/00

(54) **ROOF GROWTH SYSTEM**
DACHANBAUSYSTEM
SYSTÈME DE CULTURE SUR TOITURE

(30) Priority: 19.07.2011 NL 2007142
(43) Date of publication of application: 28.05.2014
(73) Proprietor: Visser's-Gravendeel Holding B.V., 3295 KH 's-Gravendeel (NL)
(72) Inventor: VISSER, Cornelis Frans Taco, 3295 AE 's-Gravendeel (NL); VAN DER STOEL, Andries, 3295 AB 's-Gravendeel (NL)
(74) Representative: Grootscholten, Johannes A.M.
(86) International application number: PCT/NL2012/000055
(87) International publication number: WO 2013/012319

(56) References cited:
- EP-A1- 1 044 599
- FR-A1- 2 703 213
- FR-A1- 2 929 632
- US-B1- 6 606 823

## Description

The present invention relates to a roof growth system, comprising at least one holder-like container for placing on a roof and having a growth substrate therein during use, and a connection for arranging the container on the roof at least during use.

Such systems are known, for instance from FR-2,929,632, wherein cables from which containers are suspended are applied as connection to for instance a sloping roof. US 6,606,823 further discloses a system with an integrated irrigation.

The known systems have drawbacks. Containers suspended from cables as according to FR-2,929,632 can thus be susceptible to wind when it blows under the containers, and the containers can be detached from the roof and/or begin to rattle thereon. The roofs are then possibly not designed for the forces then exerted by the containers on these roofs. It is noted in this respect that known containers comprise excess space so as to be able to contain a reserve of (rain)water in order to prevent withering of the vegetation in the containers. Usually taken into account here is that the weight of containers remains below the load-bearing capacity of the roofs (and often only a little below this load-bearing capacity), but in the case of heavy rain or a layer of snow the weight of the combination of the rain that has fallen or the layer of snow and the containers is nevertheless often greater than the load-bearing capacity of the roof. In order to prevent problems caused for instance by collapsing roofs, roofs have to be reinforced for the purpose of placing a known system for roof growth thereon. There is therefore a need for lighter containers, although these are more susceptible to the influences of wind. Weighting the connection in order to better immobilize the containers on the roof meets with the same problem, that the load on the roof by the containers and the weighted connection (compared to the known cables) can become too high even more quickly in determined conditions such as heavy rain or snowfall.

According to US 6,606,823 irrigation can be applied and adjacent containers or trays can on the one hand be coupled at a distance with dovetail connections on which conduits can be laid or mounted, or on the other be coupled close-fittingly and be placed loosely on conduits.

The present invention aims to obviate or at least reduce, preferably considerably, the above stated and/or other problems of the known systems, for which purpose a system according to the invention is provided which is distinguished from the known system by at least one conduit to be connected at least to a liquid source; and by an irrigation which is associated with the holder-like container and which can be connected at least to the conduit. The system according to the invention must further have the feature that the connection comprises an engagement formed on or between an outer side of a side wall of the container and the roof. The system can be further simplified in the sense that separate mounting planks or slats can be dispensed with and mounting of the containers can take place using the conduit(s), or the planks or slats may comprise conduits. The system further has the feature here that the conduit can be fixed at least to the roof and the engagement comprises at least one edge or flange on at least one of the container and the conduit. This produces a hooking system which is very simple to mount and wherein the edge or flange can hook or at least engage on, behind, in or at the other of the conduit and the container in order to immobilize the container and the conduit relative to each other. As an alternative, a mounting slat is preferably provided which can be mounted at least on the roof during use, wherein an edge or flange is arranged on the container and in mounted state hooks into or on the mounting slat. It is noted here, the mounting slat can also form the conduit (and vice versa).

In a system according to the invention the water reserve can be decreased, whereby the weight of the containers can be minimized. The reduction in weight is surprisingly even such that according to the invention a much more adequate connection (than only a cable in the known system) has become possible in order to secure the containers on the roof, this without any imminent danger of rainfall or snowfall compromising the load-bearing capacity of an associated roof.

In an embodiment the system according to the invention can have the feature that the irrigation comprises at least one sprinkler head. Such a sprinkler head can sprinkle a plurality of containers. In an additional or alternative embodiment the system according to the invention can have the feature that the irrigation comprises at least one dripper. The system can have the feature here that the dripper comprises a flexible conduit in or through the container.

In an additional or alternative embodiment the system according to the invention can have the feature of at least two containers and at least one coupling for coupling the at least two containers in close connection. Combinations of containers can thus almost wholly cover the roof involved, and collect all precipitation and thus contribute toward the water-tightness of the roof and also reduce the irrigation requirement, while the irrigation per se minimizes the need for sizeable precipitation reservoirs in the containers. The system can have the further feature here that at least one of the two containers comprises an overhang having therein or thereon at least a part of the coupling, with a cavity under the overhang in which the conduit is accommodated. The conduit can thus be provided in space-saving manner in order to maximize covering of the roof with containers.

In an additional or alternative embodiment the system according to the invention can have the feature that the holder-like container comprises a side wall diverging upward and outward from the bottom thereof. Conduits and/or mounting planks or slats can be accommodated easily and efficiently in thus formed spaces between containers.

In an additional or alternative embodiment the system according to the invention can have the feature that at least one of a bottom of the container and a side wall extending from the bottom of the container comprises a break-off piece for passage of the dripper and connection thereof to the conduit. Such a break-off piece preferably has a peripheral form closely corresponding to the peripheral form of for instance a sprinkler head and/or dripper in order to realize as closed a surface as possible on top of the roof, which can contribute toward the moisture-tightness of the roof as a whole.

In an additional or alternative embodiment the system according to the invention can have the feature that a bottom of the holder-like container comprises at least one elongate elevation for receiving along the bottom at least one carrier, for instance a fork of a forklift truck. Such an elevation can serve to enclose a fork of a forklift truck, for instance during assembly of a system according to the invention on a roof, but can also serve to accommodate conduits and/or mounting planks or slats in such a system in the assembled form.

In an additional or alternative embodiment the system according to the invention can have the feature that a bottom of the holder-like container comprises at least one elevation with holes for draining excess liquid. A limited reservoir can thus be realized despite the provided irrigation.

In an additional or alternative embodiment the system according to the invention can have the feature that inner dimensions of the holder-like container are dimensioned for receiving close-fittingly therein at least one tray of standardized dimensions. It is thus possible to place separate insert trays with clamp fitting in the container and so be able to grow several plants. The insert trays are easy to replace, possibly with different vegetation in each case.

In an additional or alternative embodiment the system according to the invention can have the feature that the growth substrate comprises:
- a layer of particulate material such as gravel and/or chippings on the bottom of the holder-like container;
- a separating layer on the layer of particulate material, for instance a layer of a fleece material and/or root barrier; and
- a growth layer comprising for instance earth and/or coco fibre and/or glasswool and/or rockwool. The space occupied by the particulate material can serve as liquid buffer, the intermediate layer can limit root growth to the volume of the container located thereabove, in which space the growth layer of earth or the like is situated. A complete system is thus provided.

It is noted that the present invention otherwise also relates per se to containers and conduits such as are evidently intended, designed and suitable for use in a system according to the present invention.

Following the foregoing general indication of the specific properties of a system according to the present invention, a specific embodiment will be described hereinbelow on the basis of the accompanying drawing, which is in no way intended or should be interpreted as limiting the scope of protection defined in the claims, and in which the same reference numerals are applied for the same or similar parts, components and aspects, and in which:
fig. 1 is a perspective view of a building with a roof and with a system for roof growth according to the present invention;
fig. 2 is a top view according to arrow II in figure 1;
fig. 3 is a perspective view of a container of the system according to figure 1 with fuller details thereof;
fig. 4 is a perspective view of part of a container of the system according to figure 1 with a fuller detail thereof;
fig. 5 is a top view according to arrow V in figure 4;
fig. 6 is a detailed perspective view of a container during use in a system according to the present invention;
fig. 7 is a side view according to arrow VII in figure 6;
fig. 8 shows an alternative arrangement relative to figure 2 of containers in a system according to the present invention;
fig. 9 is a perspective view of a container with additional insert trays according to the invention; and
fig. 10 is a side view in vertical section of a filled container 6 during use.

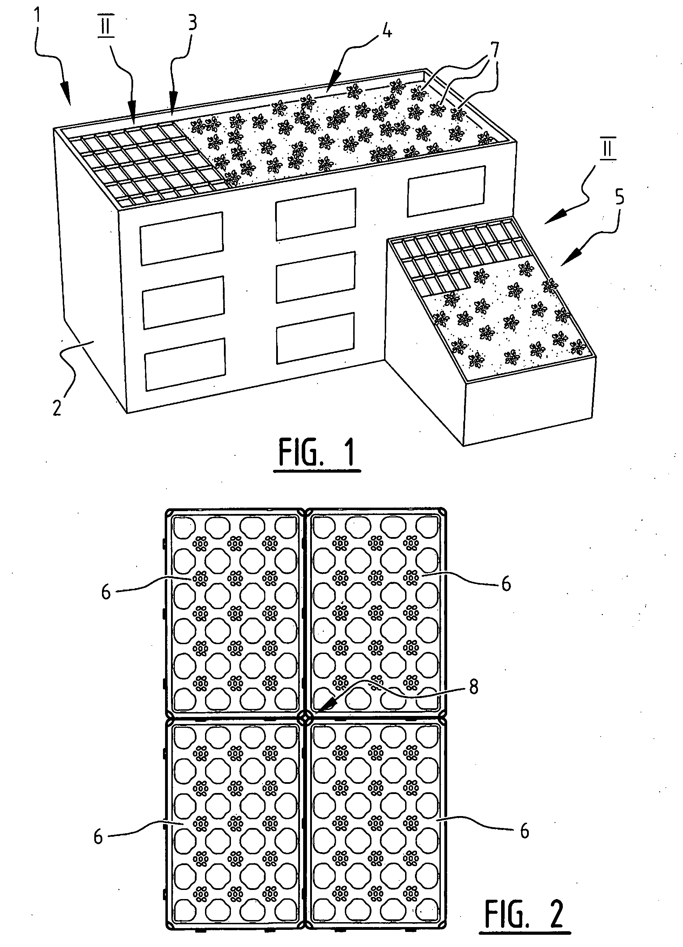

Fig. 1 shows a building 1. Building 1 has side walls 2 which support a roof 3. Roof 3 is covered with a system 4 according to the present invention. Building 1 has a system 4 according to the present invention on the flat roof of a main building and the sloping roof 5 of an annexe. Fig. 2 is a top view of a part of a system 4 according to the present invention during use (indicated with arrow II in fig. 1). In fig. 2 this is an assembly of four containers 6 without substrate or vegetation. Plants are shown in fig. 1 by way of example of a form of vegetation. An alternative could be a grass cover or shrubs and so on.

The assembly of four containers 6 in fig. 2 represents only a part of the overall number of containers which may be required to cover a flat roof 3 or a sloping roof 5 of building 1. Containers 6 are mutually coupled in a manner further described below and in the centre of the combination of four containers 6 shown in fig. 2 is provided a sprinkler head 8, likewise in a manner further described below.

The containers can have a upright side walls, i.e. perpendicular to the bottom thereof.

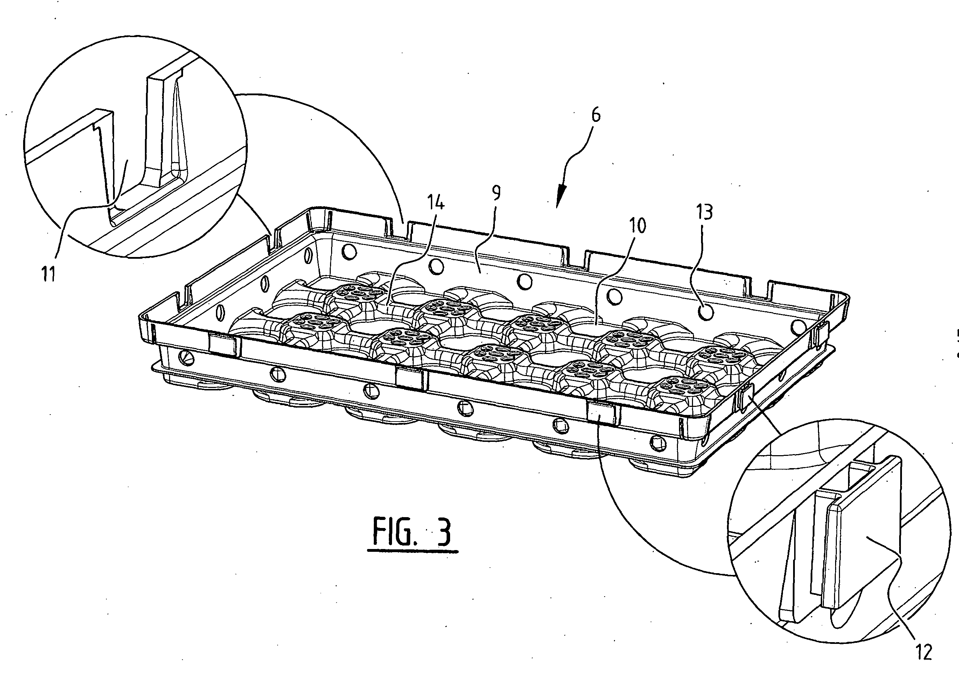

As shown in fig. 3 however, side walls 9 take a diverging form relative to bottom 10 of the holder-like container 6 in fig. 3. Formed along one of the long sides and one of the short sides are recesses 11 into which engage coupling plates along the other of the long sides and the short side of an adjacent container 6. Recesses 11 and coupling plates 12 together form couplings between or of adjacent containers 6. Also arranged in side walls 9 of container 6 are passages 13 through which hoses or conduits can extend, preferably through a growth substrate in container 6. Such hoses or conduits (not shown in fig. 3) for instance form part of a dripper, wherein dripper elements can draw from such hoses or conduits through the openings or holes 13 in side walls 9 of the containers.

Using the couplings formed by recesses 11 and coupling plates 12 it is possible to place adjacent containers 6 connecting closely against each other during assembly of individual containers 6 on a roof as shown in fig. 1. It is thus possible to ensure that as much precipitation as possible enters containers 6. Also realized here is that the roof itself with containers 6 thereon is already made as watertight as possible with containers 6, which can contribute toward the lifespan of the roof.

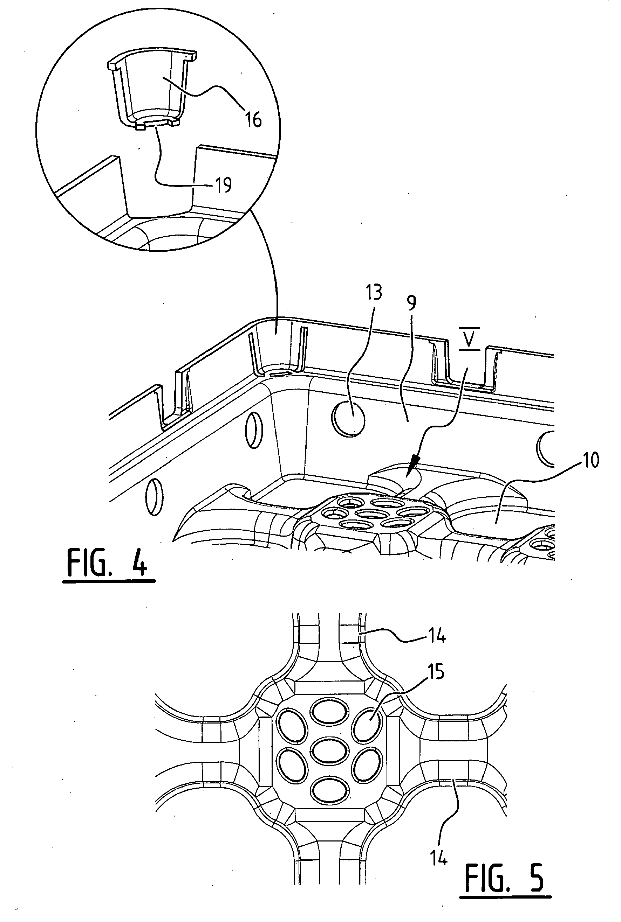

When however a bottom 10 of containers 6 is articulated as shown in fig. 3 or fig. 5, the bottom comprises elevations 14 with drain holes 15 which provide for drainage of an excess quantity of liquid, in particular rainwater or other precipitation, when the level thereof rises above the level of elevations 14. Such elevations 14, which are elongate, simultaneously form passages under containers 6 for receiving therein or thereunder forks (not shown) of for instance a forklift truck. It is also possible to arrange conduits, for instance for the irrigation system, under these elevations 14. For displacement of containers 6 forks of a forklift truck can also engage on (preferably under) flange 22 (see below) or the shoulder in the outer side of the upward diverging form of the side wall of container 6.

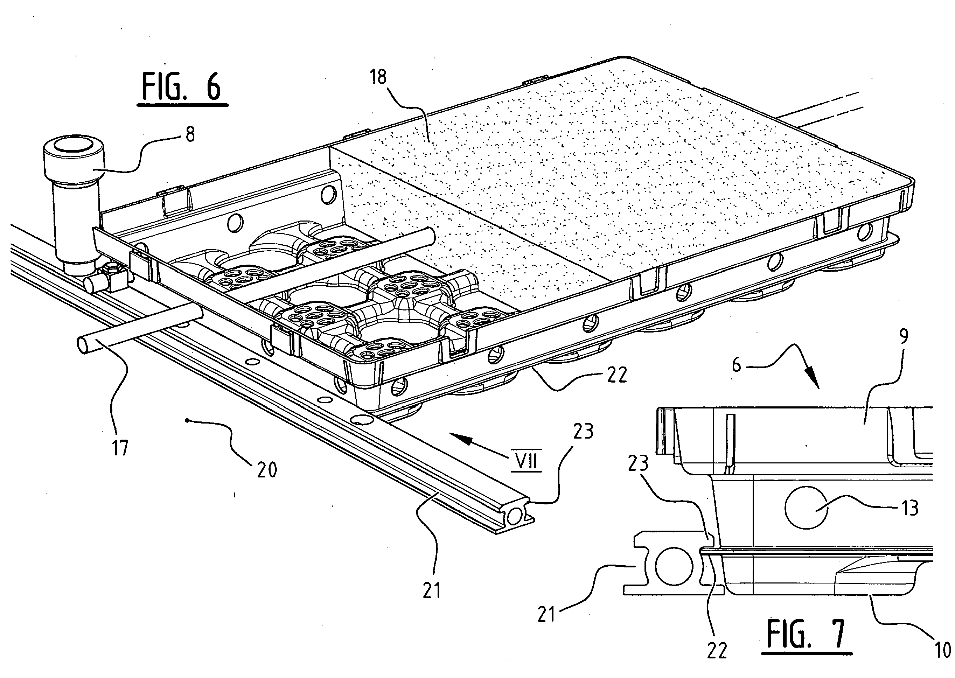

In addition, it is also possible to make use of the configuration shown in perspective view in fig. 4, where use is made of break-off corners 16 on the upper side of the diverging side walls 9 of containers 6. Such break-off corners 16 have a shape closely corresponding to an outer peripheral form of a sprinkler head 8 as shown in more detail in fig. 1 and in fig. 6. Once four break-off corners 16 of fig. 4 of adjacent containers 6 have been broken away, a passage is provided for a sprinkler head 8 as shown in fig. 6, wherein individual containers 6 connect closely to (a quarter part of) the peripheral form of sprinkler head 8. The use of a sprinkler head 8 does not prevent the possibility of conduits or hoses also being arranged through a growth substrate 18 in containers 6, as shown in fig. 6. The sprinkler head sprinkles liquid, in particular water, over a number of adjacent containers, while the hose or conduit 17 can extend through diverse containers 6 in order to administer water or other liquid very locally, for instance using a dripper element (not shown) which can be connected to such a hose or conduit 17.

Break-off corner 16 has an edge 19 which is directed inward relative to container 6 and the peripheral form of which corresponds to a quarter part of the peripheral form of sprinkler head 8. The break-off or breakaway corners can be applied even when conduits 21 play no part in assembling of the system, such as the assembly described below with reference to fig. 6 and fig. 7.

As shown in fig. 6 and fig. 7, a conduit 21 which is connected or can be connected to a liquid source (not shown) is arranged over roof 20. Sprinkler head 8 is connected directly to conduit 21, whereby conduit 21 forms a supply for the irrigation in the form of sprinkler head 8 or the hose or conduit 17 forming part of a dripper system.

The form of the side walls 9 diverging away from the bottom 10 of container 6 makes it possible for parts of side walls 9 to overhang conduit 21. The couplings 11, 12 between the adjacent containers 6 close over conduit 21. Containers 6 at the same time comprise a flange 22 round the periphery thereof. Such a flange can also be arranged at selected locations instead of all the way around container 6. In the assembled state of the system according to the present invention flange 22 protrudes below an edge 23 on the upper side of conduit 21. Fig. 7 shows how flange 22 on container 6 protrudes below edge 23 on conduit 21. Containers 6 can in this way be immobilized on the roof without separate mounting planks or slats needing to be used, since conduits 21 comprise the edges 23 below which the flanges 22 on containers 6 can be accommodated. Conduits 21 are mounted on roof 20 using separate means such as adhesive, screwing means or in other manner. The containers can be pushed against each other with flanges 22 below edges 23 during assembly of the system according to the present invention, wherein a container 6 is coupled in each case by means of couplings 11,12 to an adjacent container 6, the flange 22 of which has already been (at least partially) placed below an edge 23 of conduit 21. A series of containers can thus be coupled and subsequently pushed further with the flanges 22 extending below edges 23. Once the individual containers 6 have in this way reached a desired position, the break-off corners 16 can be broken away from the containers where a sprinkler head 8 has to be placed. Sprinkler head 8 can then be connected directly to conduit 21, for instance using a rapid-action coupling or by screwing sprinkler head 8 into conduits 21 so as to thus bring about a connection between sprinkler head 8 and the interior of conduit 21 to enable spraying or sprinkling of the substrate 18 in containers 6, wherein conduits or hoses 17 serve the same purpose and can likewise be coupled in a manner self-evident to the skilled person to the interior of conduits 21 in order to provide a dripper.

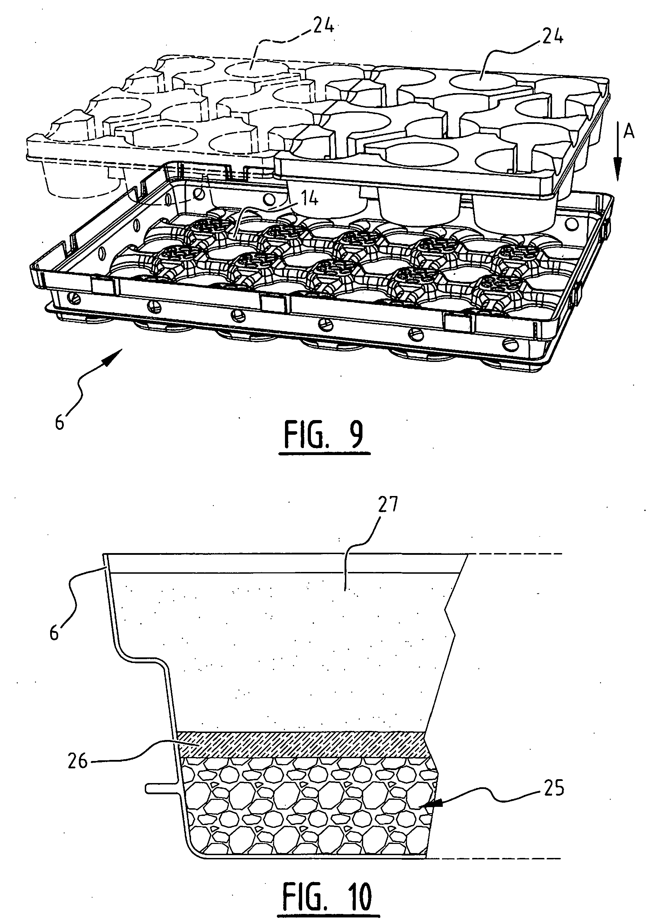

Shown in fig. 9 is that inner dimensions of the holder-like container 6 are dimensioned for the purpose of close-fittingly receiving therein at least one tray 24 of standardized dimensions. Two insert trays 24 fit into the container, although this can be limited to one insert tray 24 or a random number higher than two. Such an embodiment can be applied even when no conduits and irrigation are provided.

Fig. 10 shows a cross-section of a filled container 6 during use. The growth substrate comprises a number of layers here: a layer of particulate material such as gravel 25 and/or chippings on the bottom of the holder-like container; a separating layer on the layer of particulate material, for instance a layer of a fleece material 26 and/or root barrier; and a growth layer comprising for instance earth 27 and/or coco fibre and/or glasswool and/or rockwool.

After examination of the foregoing disclosure of the present invention many alternative and additional embodiments will occur to the skilled person. All separate components, elements and properties can be combined, for instance a gravel layer on the bottom of the holder-like container having thereon an insert tray of standardized dimensions or, conversely, a layer of earth on the bottom with the insert tray thereon, or fleece layer 26 of fig. 10 can be omitted so that gravel 25 and earth 27 remain. It is thus further possible for only one of the sprinkler head 8 and the dripper 17 to be implemented, and not both. Mounting planks or slats can also be applied instead of the multifunctional conduits 21 for the purpose of immobilizing the containers on the roof. The bottom need not necessarily comprise the elevations 14, although these can usefully serve to accommodate forks of a forklift truck, for instance during assembly of the system according to the invention. Providing an overflow in the form of the openings, passages or holes 15 in elevations 14 is not per se necessary, and containers 6 can also comprise an overflow system between one another, for instance mutual connections via holes 13, in order to avoid too high a reserve of (rain)water in containers 6.

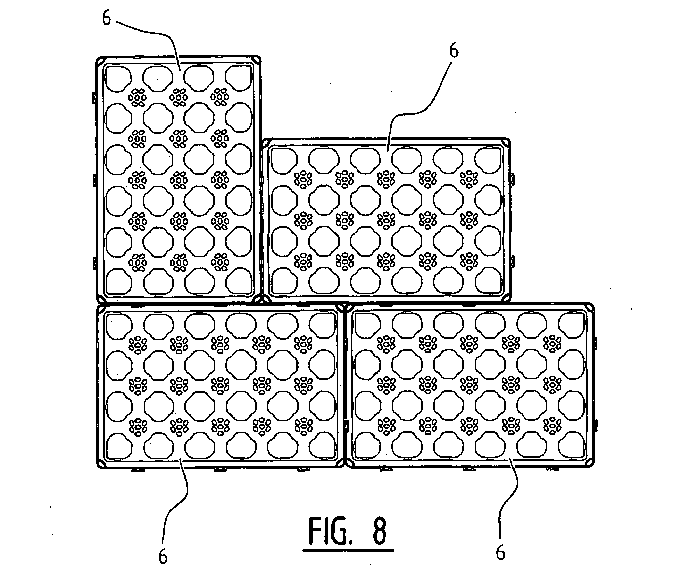

Fig. 2 shows how containers 6 can engage together. Fig. 8 shows an alternative wherein containers 6 are coupled in offset manner, thereby providing an even stronger mutual connection. Couplings 11,12 are positioned such that such an offset connection or coupling of containers 6 is possible. In such an embodiment a break-off piece for one of three adjacent containers 6 will preferably have to follow half the periphery of the sprinkler head in order to make the containers 6 in combination with the sprinkler head as close-fitting as possible, or at least place them in the closest possible connection.

The system according to the present invention can be applied on flat roofs and sloping roofs, wherein immobilization of containers 6 is optimized while the amount of space for a reserve supply of liquid or water is minimized by applying irrigation, which is supplied through conduits 21, even if mounting slats or other elements are applied to immobilize containers 6 on the roof. The containers need not necessarily comprise elevations 14, although these can be useful for the purpose of defining an overflow in association with the openings or holes 15 and/or in respect of accommodating forks of forklift trucks for the purpose of manipulating the containers during or prior to assembly of a system according to the present invention. The above stated additional and alternative embodiments are also not in any way intended, and should not in any way be interpreted as such, as being limitative for the present invention, which is limited only to the scope of protection as defined in the appended claims, in particular the independent claims.

## Claims

1. A roof growth system (4), comprising:
- at least one holder-like container (6) for placing on a roof and having a growth substrate therein during use;
- a connection for arranging the container on the roof at least during use, with the connection comprising an engagement (22, 23) formed on or between an outer side of a side wall of the container and the roof;
- at least one conduit (21) to be connected at least to a liquid source; and
- an irrigation which is associated with the holder-like container and which can be connected at least to the conduit, **characterized by**:
- a mounting slat which can be mounted at least on the roof during use, wherein the engagement comprises an edge or flange (22) arranged on the container and in mounted state hooks into or on the mounting slat.

2. The system as claimed in claim 1, wherein the mounting slat comprises the conduit.

3. The system as claimed in claim 1 or 2, wherein the irrigation comprises at least one sprinkler head (8).

4. The system as claimed in at least a foregoing claim, wherein the irrigation comprises at least one dripper.

5. The system as claimed in claim 4, wherein the dripper comprises a flexible conduit in or through the container.

6. The system as claimed in at least a foregoing claim, comprising at least two containers (6) and at least one coupling (11, 12) for coupling the at least two containers in close connection, wherein at least one of the two containers comprises an overhang having therein or thereon at least a part of the coupling (11, 12), with a cavity under the overhang in which the conduit (21) is accommodated.

7. The system as claimed in at least a foregoing claim, wherein the holder-like container (6) comprises a side wall diverging upward and outward from the bottom thereof.

8. The system as claimed in at least a foregoing claim, wherein at least one of a bottom of the container and a side wall extending from the bottom of the container comprises a break-off piece (16) for passage of the dripper (8) and connection thereof to the conduit (21).

9. The system as claimed in at least a foregoing claim, wherein a bottom (10) of the holder-like container (6) comprises at least one elongate elevation (14) for receiving along the bottom at least one carrier, for instance a fork of a forklift truck.

10. The system as claimed in at least a foregoing claim, wherein a bottom of the holder-like container comprises at least one elevation (14) with holes (15) for draining excess liquid.

11. The system as claimed in at least a foregoing claim, wherein inner dimensions of the holder-like container (6) are dimensioned for receiving close-fittingly therein at least one insert tray (24) of standardized dimensions, and wherein the system further comprises the at least one insert tray (24).

12. The system as claimed in at least a foregoing claim, wherein the growth substrate comprises:
- a layer (25) of particulate material such as gravel and/or chippings on the bottom of the holder-like container;
- a separating layer (26) on the layer of particulate material, for instance a layer of a fleece material and/or root barrier; and
- a growth layer (27) comprising for instance earth and/or coco fibre and/or glasswool and/or rockwool.

13. A container which in use forms part of a system as claimed in at least one of the foregoing claims.

14. A conduit which in use forms part of a system as claimed in claim 2 or at least one of the foregoing claims 3-12 in combination with claim 2.

## Patentansprüche

1. Ein Dachanbausystem (4), das aufweist:
- mindestens einen halterungsartigen Behälter (6) zur Platzierung auf einem Dach und der bei Gebrauch ein Wachstumssubstrat darin hat;
- eine Verbindung zur Anordnung des Behälters auf dem Dach mindestens bei Gebrauch, wobei die Verbindung einen Eingriff (22, 23) aufweist, der auf bzw. an oder zwischen einer äußeren Seite einer Seitenwand des Behälters und dem Dach ausgebildet ist;
- mindestens eine Leitung (21), um mit mindestens einer Flüssigkeitsquelle verbunden zu sein; und
- eine Bewässerung, welche dem halterungsartigen Behälter zugeordnet ist und welche mindestens mit der Leitung verbunden werden kann, **gekennzeichnet durch**:
- eine Anbringungsleiste, welche bei Gebrauch mindestens auf bzw. an dem Dach angebracht werden kann, wobei der Eingriff einen Rand oder Flansch (22) aufweist, der an dem Behälter angeordnet ist und in angebrachtem Zustand in die oder an der Anbringungsleiste einhakt oder einrastet.

2. Das System gemäß Anspruch 1, wobei die Anbringungsleiste die Leitung aufweist.

3. Das System gemäß Anspruch 1 oder 2, wobei die Bewässerung mindestens einen Sprinklerkopf (8) aufweist.

4. Das System gemäß mindestens einem der vorhergehenden Ansprüche, wobei die Bewässerung mindestens einen Tropfer aufweist.

5. Das System gemäß Anspruch 4, wobei der Tropfer eine flexible Leitung im oder durch den Behälter aufweist.

6. Das System gemäß mindestens einem der vorhergehenden Ansprüche, wobei es mindestens zwei Behälter (6) und mindestens eine Kupplung bzw. Kopplung (11,12) aufweist für Verbindung der mindestens zwei Behälter in enger Verbindung, wobei mindestens einer der zwei Behälter einen Überhang aufweist, der darin oder darauf mindestens einen Teil der Kupplung bzw. Kopplung (11,12) hat, wobei ein Hohlraum unter dem Überhang ist, in welchen die Leitung (21) aufgenommen ist.

7. Das System gemäß mindestens einem der vorhergehenden Ansprüche, wobei der halterungsartige Behälter (6) eine Seitenwand aufweist, die von dem Boden hiervon nach oben und außen auseinanderläuft.

8. Das System gemäß mindestens einem der vorhergehenden Ansprüche, wobei mindestens einer von einem Boden des Behälters und einer Seitenwand, die sich von dem Boden des Behälters erstreckt, ein Abbrech-Stück (16) für einen Durchgang des Tropfers (8) und eine Verbindung davon mit der Leitung (21) aufweist.

9. Das System gemäß mindestens einem der vorhergehenden Ansprüche, wobei ein Boden (10) des halterungsartigen Behälters (6) mindestens eine langgestreckte Erhebung (14) zur Aufnahme mindestens eines Trägers entlang des Bodens aufweist, zum Beispiel einer Gabel eines Gabelstaplers.

10. Das System gemäß mindestens einem der vorhergehenden Ansprüche, wobei ein Boden des halterungsartigen Behälters mindestens eine Erhöhung (14) mit Löchern (15) für ein Ablaufen von Überschussflüssigkeit aufweist.

11. Das System gemäß mindestens einem der vorhergehenden Ansprüche, wobei innere Abmessungen des halterungsartigen Behälters (6) bemessen sind, um mindestens eine Einsatzschale (24) von normalen bzw. standardisierten Abmessungen darin eng passend aufzunehmen, und wobei das System ferner die mindestens eine Einsatzschale (24) aufweist.

12. Das System gemäß mindestens einem der vorhergehenden Ansprüche, wobei das Wachstumssubstrat aufweist:
- eine Schicht (25) aus partikelförmigem Material, wie beispielsweise Kies und / oder Splitt, auf dem Boden des halterungsartigen Behälters;
- eine Trennschicht (26) auf der Schicht aus partikelförmigem Material, zum Beispiel eine Schicht aus einem Fleecematerial und / oder einer Wurzelsperre; und
- eine Wachstumsschicht (27), die zum Beispiel Erde und / oder Kokosfasern und / oder Glaswolle und / oder Steinwolle aufweist.

13. Ein Behälter, welcher im Gebrauch Teil eines Systems gemäß mindestens einem der vorhergehenden Ansprüche darstellt.

14. Eine Leitung, welche im Gebrauch Teil eines Systems gemäß Anspruch 2 oder mindestens einem der vorhergehenden Ansprüche 3 - 12 in Verbindung mit Anspruch 2 darstellt.

## Revendications

1. Système de croissance sur un toit (4), comprenant:
- au moins un contenant similaire à un support (6) destiné à être placé sur un toit, et qui présente à l'intérieur un substrat de croissance au cours d'une utilisation ;
- une connexion destinée à agencer le contenant sur le toit au moins en cours d'utilisation, la connexion comprenant un dispositif de mise en prise (22, 23) formé sur, ou entre, un côté extérieur d'une paroi latérale du contenant et le toit ;
- au moins une canalisation (21) destinée à être connectée au moins à une source de liquide ; et
- un dispositif d'irrigation qui est associé au contenant similaire à un support et qui peut être connecté au moins à la canalisation, **caractérisé par** :
- un montant de montage qui peut être monté au moins sur le toit en cours d'utilisation, dans lequel le dispositif de mise en prise comprend un bord ou une bride (22) agencé sur le contenant et qui, dans l'état monté, s'accroche dans ou sur le montant de montage.

2. Système selon la revendication 1, dans lequel le montant de montage comprend la canalisation.

3. Système selon la revendication 1 ou la revendication 2, dans lequel le dispositif d'irrigation comprend au moins une tête d'arrosage (8).

4. Système selon l'une quelconque des revendications précédentes, dans lequel le dispositif d'irrigation comprend au moins un dispositif goutte à goutte.

5. Système selon la revendication 4, dans lequel le dispositif goutte à goutte comprend une canalisation souple dans, ou à travers, le contenant.

6. Système selon l'une quelconque des revendications précédentes, comprenant au moins deux contenants (6) et au moins un dispositif d'accouplement (11, 12) destiné à accoupler les deux contenants au moins selon une connexion étroite, dans lequel l'un au moins des deux contenants comprend un porte-à-faux qui présente, à l'intérieur ou au-dessus, une partie au moins du dispositif d'accouplement (11, 12), avec une cavité sous le porte-à-faux dans laquelle est reçue la canalisation (21).

7. Système selon l'une quelconque des revendications précédentes, dans lequel le contenant similaire à un support (6) comprend une paroi latérale qui diverge vers le haut et vers l'extérieur à partir du fond de celui-ci.

8. Système selon l'une quelconque des revendications précédentes, dans lequel l'un au moins du fond du contenant et d'une paroi latérale qui s'étend à partir du fond du contenant, comprend une pièce à briser (16) destinée au passage du dispositif goutte à goutte (8) et à la connexion de celui-ci vers la canalisation (21).

9. Système selon l'une quelconque des revendications précédentes, dans lequel le fond (10) du contenant similaire à un support (6) comprend au moins une pente allongée (14) destinée à recevoir, le long du fond, au moins un dispositif porteur, par exemple une fourche d'un chariot élévateur.

10. Système selon l'une quelconque des revendications précédentes, dans lequel le fond du contenant similaire à un support, comprend au moins une pente (14) avec des trous (15) destinés à drainer un excès de liquide.

11. Système selon l'une quelconque des revendications précédentes, dans lequel les dimensions intérieures du contenant similaire à un support (6) sont dimensionnées de façon à recevoir à l'intérieur, avec un ajustement sans jeu, au moins un plateau d'insertion (24) qui présente des dimensions normalisées, et dans lequel le système comprend en outre le ou les plateaux d'insertion (24).

12. Système selon l'une quelconque des revendications précédentes, dans lequel le substrat de croissance comprend :
- une couche (25) de matériau particulaire tel que du gravier et / ou des gravillons sur le fond du contenant similaire à un support ;
- une couche de séparation (26) sur la couche de matériau particulaire, par exemple une couche de matériau molletonné et / ou une barrière vis-à-vis des racines ; et
- une couche de croissance (27) qui comprend par exemple de la terre et / ou des fibres de coco et / ou de la laine de verre et / ou de la laine de roche.

13. Contenant qui, en service, fait partie d'un système selon l'une quelconque des revendications précédentes.

14. Canalisation, qui, en service, fait partie d'un système selon la revendication 2 ou l'une au moins des revendications précédentes 3 à 12 en association avec la revendication 2.
